# EUROPEAN PATENT APPLICATION

(11) **EP 4 197 315 A1**
(43) Date of publication of application: **21.06.2023**
(21) Application number: 21214603.9
(22) Date of filing: 15.12.2021
(51) Int. Cl.: A01G 24/22, A01G 24/44, A01G 24/60

(54) **A METHOD FOR PRODUCING A DRY PREFORMED PLANT GROWTH SUBSTRATE AND A DRY PREFORMED PLANT GROWTH SUBSTRATE**

(71) Applicant: Click & Grow OÜ, 50603 Tartu (EE)
(72) Inventor: Sõer, Maret, 50603 Tartu (EE); Järvekülg, Martin, 50603 Tartu (EE); Kangur, Triin, 50603 Tartu (EE); Timusk, Martin, 50603 Tartu (EE); Lepp, Mattias, 50603 Tartu (EE)
(74) Representative: Primrose Oy

(57) **Abstract**

The invention relates to a method for producing a dry preformed plant growth substrate (1) and to a dry preformed plant growth substrate (1). The dry preformed growth substrate (1) comprises a solid substrate body (10) having a top surface (11), a bottom surface (12) and an outer surface (13) extending between the top surface (11) and the bottom surface (12) around the solid substrate body (10), seeds (40) arranged inside the solid substrate body (10), and the solid substrate body (10) comprising in a dry state at least one plant-derived component and an adhesive component forming a mixture (20) in a form of a solid substrate body (10), and the solid substrate body (10) further comprising natamycin.

## Description

### FIELD OF THE INVENTION

The present invention relates to a method for producing a dry preformed plant growth substrate, and more particularly to a method as defined in preamble of the independent claim 1.

The present invention also relates to a dry preformed plant growth substrate, and more particularly to a dry preformed plant growth substrate as defined in preamble of the independent claim 12.

### BACKGROUND OF THE INVENTION

A dry preformed plant growth substrates are used in an indoor garden device having pots for the substrates in which the plants are grown from seeds arranged inside the dry preformed plant growth substrates.

Fungal growth and mold are well-known occurrences in products of natural origin. However, fungal growth and mold are problematic in connection with devices as it can clog technical parts of the devices and prevent the correct operation of the devices. In addition, in connection with indoor garden devices fungal growth is very problematic if it spreads from the pot having the substrate to a water container of the indoor garden device, which is also the case with mold.

### BRIEF DESCRIPTION OF THE INVENTION

An object of the present invention is to provide a method for producing a dry preformed plant growth substrate which prevents the problems caused by fungal growth or mold in an indoor garden device. A further object of the present invention is to provide a dry preformed plant growth substrate which is ready to use in an indoor garden device without fungal growth or mold.

The objects of the invention are achieved by a method for producing a dry preformed plant growth substrate and a dry preformed plant growth substrate which are characterized by what is stated in the independent claims. The preferred embodiments of the invention are disclosed in the dependent claims.

The invention is based on the idea of producing a plant growth substrate for growing plants which has been treated with a natamycin suspension such that seeds provided inside the plant growth substrate do no start to germinate prematurely and such that the prepared plant growth substrate is in dry form.

A method according to the invention for producing a dry preformed plant growth substrate arranged to be used for growing plants in an indoor garden device comprises steps of producing a mixture by mixing a plant-derived component and solvent together; providing a mould having a 3-dimensional shape for a preformed growth substrate; directing the mixture into the mould for forming the preformed growth substrate; stabilizing the mixture inside the mould into the preformed growth substrate; removing the preformed growth substrate from the mould after stabilizing; drying the preformed growth substrate to below 20% moisture content to form a dry preformed growth substrate before adding seeds into the dry preformed growth substrate; and forming the dry preformed growth substrate into the dry preformed plant growth substrate by adding seeds into the dry preformed growth substrate. The method further comprises a step of applying natamycin suspension to the preformed growth substrate or to the dry preformed growth substrate or to the dry preformed plant growth substrate.

As the preformed growth substrate is dried below 20% moisture content before adding the seed into the dry preformed growth substrate, premature germination of the seeds does not occur. This is very important because the dry preformed plant growth substrate is prepared well in advance of use in the indoor garden device and must remain ungerminated until it is put into use and placed in the indoor garden device, at which point the seeds should begin to germinate. Therefore, it is important to consider the correct amount of natamycin suspension or application step or site of application when applying the natamycin suspension to the substrate. Alternatives in amount, step or site depend on the plant-derived component that is used.

A dry preformed plant growth substrate retains or maintains its shape during use such that it can be used in a pot of an indoor garden device to provide a growing media for plants. The preformed plant growth substrate has a predetermined shape which is formed by the mould having the 3-dimensional shape, and a structure so that it fits into the pot of the indoor garden device and guarantees favorable growth conditions for the seed arranged inside of the growth substrate. The structure of the preformed plant growth substrate is a stable porous structure in which the plant-derived component comprises fibers that are adhered together through a fibrous structure.

In the step of producing a mixture by mixing a plant-derived component and solvent together the plant-derived component may comprise for example coco coir or coconut husk, peat, wood material processed to different fractions including wood chips, sawdust and composted wood fibres, plant leaves, bale, hay, hemp, and flax. In other words, the plant-based materials are derived from plants or different parts of plants that can be processed to various extends such as mechanical milling, chemical treatment, or composting. In still other words, the plant-derived component are biogenic components.

The mixture may further but not necessarily comprise optional functional additives such as an adhesive component, fertilizers, wetting agents, or foaming agents. The adhesive component is a necessary functional additive in some mixtures. This is the case when the plant-derived component does not have a fibrous structure that would form a stable porous structure through the attachment of the fibres. However, other functional additives may not be necessary at all, but in some situations, these can also be used. In other words, the mixture may comprise as a functional additive an adhesive component. The adhesive component may be formed from one or more adhesive substances.

In the step of directing the mixture into a mould for forming a preformed growth substrate, the mixture may be in a form of a thick slurry that is poured into the mould. The mixture is at least relatively non-flowing such that there is no mixing between the top and bottom layers of the mixture in the mould, but the top surface of the preformed growth substrate is defined and formed as soon as the mixture is in the mould. The mould forms a predetermined shape of the mixture for the plant growth substrate, thereby forming the preformed plant growth substrate.

In the step of stabilizing the mixture inside the mould into the preformed growth substrate, the mixture is kept in the mould for a time period which depends on the composition of the mixture that is used for the preformed plant growth substrate. The time period can be from 10 seconds to hours depending on the plant-derived component and a possible adhesive component that are used.

In the step of removing the preformed growth substrate from the mould after stabilizing, the preformed growth substrate has a predetermined shape formed by the mould which the shape remains after removal from the mould. Moisture content of the preformed growth substrate when removed from the mould can be even around 80% but it depends on the composition of the mixture.

In the step of drying the preformed growth substrate to below 20% moisture content to form a dry preformed growth substrate before adding seeds into the dry preformed growth substrate, the preformed growth substrate is dried outside the mould to the moisture content of 20% or below such that the preformed growth substrate becomes the dry preformed growth substrate.

In the step of forming the dry preformed growth substrate into the dry preformed plant growth substrate by adding seeds into the dry preformed growth substrate, the seeds are inserted inside the dry preformed growth substrate such that the seeds remain inside the preformed growth substrate under the top surface of the dry preformed growth substrate.

The method according to the invention further comprises the step of applying natamycin suspension to the preformed growth substrate; or applying natamycin suspension to the dry preformed growth substrate; or applying natamycin suspension to the dry preformed plant growth substrate. The addition of natamycin suspension can be performed in connection with any step of the method or between any step of the method. Further, if needed, the addition of natamycin suspension may be performed in connection with multiple steps of the method and/or in between multiple steps of the method. Therefore, the natamycin suspension may be applied alternatively or in addition to the preformed growth substrate, to the dry preformed growth substrate, and/or to the dry preformed plant growth substrate. In a preferred embodiment of the invention the application of natamycin suspension is performed in or between any of the steps from the step of directing the mixture into a mould to the step of forming the dry preformed growth substrate into the dry preformed plant growth substrate.

In a preferred embodiment of the invention the step of directing the mixture into a mould for forming a preformed growth substrate is performed in connection with a conveyor belt so that the mould is arranged to be conveyed by the conveyor belt and the mixture is directed into the mould from a static feed point of the mixture. The mould may be part of a series of moulds or a mould tray. The application of natamycin suspension may also be performed from a static feed point of the natamycin suspension in connection with the conveyor belt which the static feed point of the natamycin suspension can be the same as the static feed point of the mixture or a later static feed point downstream from the static feed point of the mixture.

According to one embodiment of the invention the step of applying natamycin suspension to the preformed growth substrate or the dry preformed growth substrate or to the dry preformed plant growth substrate comprises applying natamycin suspension to the preformed growth substrate after the step of directing the mixture into a mould for forming a preformed growth substrate, and before the step of stabilizing the mixture inside the mould into the preformed growth substrate.

According to one embodiment of the invention the step of applying natamycin suspension to the preformed growth substrate or the dry preformed growth substrate or to the dry preformed plant growth substrate comprises applying natamycin suspension to the preformed growth substrate after the step of stabilizing the mixture inside the mould into the dry preformed growth substrate, and before the step of removing the preformed growth substrate from the mould after stabilizing.

According to one embodiment of the invention the step of applying natamycin suspension to the preformed growth substrate or the dry preformed growth substrate or to the dry preformed plant growth substrate comprises applying natamycin suspension to the dry preformed growth substrate after the step of drying the preformed growth substrate to below 20% moisture content to form the dry preformed growth substrate before adding seeds into the dry preformed growth substrate; and before the step of forming the dry preformed growth substrate into the dry preformed plant growth substrate by adding seeds into the dry preformed growth substrate.

According to one embodiment of the invention the step of applying natamycin suspension to the preformed growth substrate or the dry preformed growth substrate or to the dry preformed plant growth substrate comprises applying natamycin suspension to the dry preformed plant growth substrate after the step of forming the dry preformed growth substrate into the dry preformed plant growth substrate by adding seeds into the dry preformed growth substrate.

According to the invention the step of applying natamycin suspension to the preformed growth substrate or the dry preformed growth substrate or to the dry preformed plant growth substrate comprises spraying the natamycin suspension to the preformed growth substrate or the dry preformed growth substrate or to the dry preformed plant growth substrate.

According to the invention the step of directing the mixture into mould comprises directing the mixture into the mould to form a top surface of the preformed growth substrate, and the step of applying natamycin suspension to the preformed growth substrate or the dry preformed growth substrate or to the dry preformed plant growth substrate comprises applying natamycin suspension to the top surface of the preformed growth substrate; or applying natamycin suspension to the top surface of the dry preformed growth substrate; or applying natamycin suspension to the top surface of the dry preformed plant growth substrate. The natamycin suspension is applied to the top surface preferably by spraying the natamycin suspension to the top surface.

According to the invention the step of forming the dry preformed growth substrate into the dry preformed plant growth substrate comprises placing the seeds in the dry preformed growth substrate at a depth relative to a top surface of the dry preformed growth substrate. In other words, the seeds are placed inside the growth substrate at a distance from the top surface.

According to the invention the step of producing the mixture further comprises mixing at least one functional additive together with the plant-derived component and solvent. Alternatively, the step of producing the mixture further comprises mixing an adhesive component together with the plant-derived component and solvent. Alternatively, the step of producing the mixture further comprises mixing an adhesive component together with the plant-derived component and solvent and further mixing at least one other functional additive together with the plant-derived component, the adhesive component and solvent. The functional additives can be for example and adhesive component, fertilizers, wetting agents, or foaming agents.

According to the invention the method comprises a step of dispersing natamycin in water, ethanol, or propanol such that the natamycin suspension having a concentration of 2-10% by mass prior to the step of applying natamycin suspension to the preformed growth substrate or the dry preformed growth substrate or to the dry preformed plant growth substrate. Alternatively, the method comprises a step of dispersing natamycin in water, ethanol, or propanol such that the natamycin suspension having a concentration of 2-6% by mass, or a concentration 2-4% by mass, prior to the step of applying natamycin suspension to the preformed growth substrate or the dry preformed growth substrate or to the dry preformed plant growth substrate

According to the invention the step of applying natamycin suspension to the preformed growth substrate or the dry preformed growth substrate or to the dry preformed plant growth substrate comprises applying natamycin suspension to the preformed growth substrate or the dry preformed growth substrate or to the dry preformed plant growth substrate in amount maximum 2 litre/m². In other words, the step of applying natamycin suspension to the preformed growth substrate or the dry preformed growth substrate or to the dry preformed plant growth substrate comprises applying natamycin suspension to the preformed growth substrate or the dry preformed growth substrate or to the dry preformed plant growth substrate in amount up to 2 litre/m². In a preferable embodiment of the invention applying natamycin suspension to the preformed growth substrate or the dry preformed growth substrate or to the dry preformed plant growth substrate comprises applying natamycin suspension to the preformed growth substrate or the dry preformed growth substrate or to the dry preformed plant growth substrate in amount between 1,0 litre/m² and 2,0 litre/m², and preferably 1,5 litre/m².

In all the embodiments of the method, the solvent may be water or any other suitable solvent liquid to produce the mixture with plant-derived component.

A dry preformed plant growth substrate according to the invention for growing plants in an indoor garden device comprises a solid substrate body having a top surface, a bottom surface and an outer surface extending between the top surface and the bottom surface around the solid substrate body, and seeds arranged inside the solid substrate body. The solid substrate body comprising in a dry state at least one plant-derived component and an adhesive component which are interconnected to form a stable porous structure in a form of a solid substrate body, and the solid substrate body further comprising natamycin. The at least one plant-derived component and the adhesive component preferably form a mixture in the stable porous structure.

The dry preformed plant growth substrate has a shape which is formed by a mould, and which is retained or maintained during use in an indoor garden device. The natamycin forms part of the dry preformed plant growth substrate, and natamycin is provided as a natamycin suspension applied to the solid substrate body.

According to the invention the natamycin is provided at the top surface of the solid substrate body. Therefore, the natamycin suspension is applied to the top surface of the solid substrate body of the dry preformed plant growth substrate.

According to the invention, alternatively or in addition, the natamycin is provided at the outer surface of the solid substrate body.

According to the invention, alternatively or in addition, the natamycin is provided in the structure of the solid substrate body. The natamycin is thereby embedded in the structure of the solid substrate body.

An advantage of the invention is that the dry preformed plant growth substrate is pre-treated by the natamycin to prevent fungal growth or mold that can occur in natural products so that the fungal growth or mold cannot affect to the performance of the indoor garden device. A further advantage is that the dry preformed plant growth substrate comprising natamycin is a preformed substrate that retains its shape in use, and thus prevents contamination of an indoor garden device that could occur if the plant growth medium were of loose material. Also, an advantage of the invention is that by preventing the growth of fungi or mold, the seeds provided inside the dry preformed plant growth substrate are better able to penetrate through the top surface of the dry preformed plant growth substrate and are not suppressed in a very early stage of development.

### BRIEF DESCRIPTION OF THE DRAWINGS

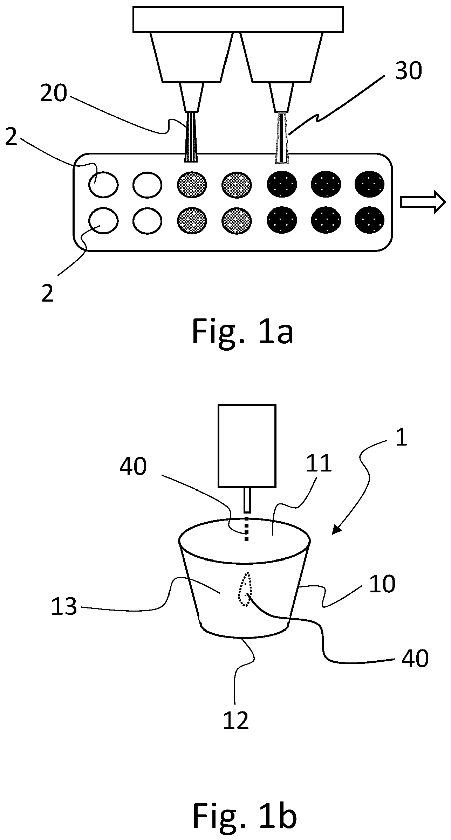

The invention is described in detail by means of specific embodiments with reference to the enclosed drawings, in which
Figure 1a shows an embodiment of the method according to the invention; and
Figure 1b shows a preformed growth substrate according to the invention.

### DETAILED DESCRIPTION OF THE INVENTION

Figure 1a shows an embodiment of the method according to the invention in which the molds 2 are movable relative to the stationary feeding point from which the mixture 20 and the natamycin suspension 30 are supplied to the molds 2.

In the first phase the mixture 20 which is produced by mixing a plant-derived component and solvent together is directed into a mould 2 for forming a preformed growth substrate 1. The mixture 20 may further comprise an adhesive component. The mould 2 has a predetermined form which makes the preformed shape of the substrate 1. According to the part of the method shown in figure 1 after the mixture 20 is directed to the mould 2, the natamycin suspension 30 is applied to the mixture 20 provided in the mould 2 such that the natamycin suspension 30 is applied to the top surface 11 formed when the mixture is poured into the mould 2. The mixture 20 can stabile before the application of the natamycin suspension 30 and/or after the application of natamycin suspension 30.

Depending on the composition of the mixture and the properties of the plant-derived component and the possible adhesive component, the mixture stabilizes in the mould 2 into the preformed growth substrate 1 a period of time which can be from second into hours. After the stabilization, the preformed growth substrate 1 is removed from the mould 2.

Figure 1b shows the preformed growth substrate 1 which is removed from the mould 2 and the phase in which the seeds 40 are added to the preformed growth substrate 1. The growth substrate 1 has the moisture content below 20% in order to prevent germination of the seeds 40 provided inside the growth substrate 1. The dry preformed growth substrate 1 as shown in figure 1b comprises a solid substrate body 10 having a top surface 11, a bottom surface 12 and an outer surface 13 extending between the top surface 11 and the bottom surface 12 around the solid substrate body 10 and seeds 4 arranged inside the solid substrate body 10. In this embodiment of the invention the solid substrate body 10 further comprising in a dry state at least one plant-derived component and an adhesive component forming a mixture 2 in a form of a solid substrate body 10 and natamycin.

The invention has been described above with reference to the examples shown in the figures. However, the invention is in no way restricted to the above examples but may vary within the scope of the claims.

## Claims

1. A method for producing a dry preformed plant growth substrate (1) arranged to be used for growing plants in an indoor garden device, **characterized in that** the method comprises steps of:
producing a mixture (20) by mixing a plant-derived component and solvent together;
providing a mould (2) having a 3-dimensional shape for a preformed growth substrate (1);
directing the mixture (20) into the mould (2) for forming the preformed growth substrate (1);
stabilizing the mixture (20) inside the mould (2) into the preformed growth substrate (1);
removing the preformed growth substrate (1) from the mould (2) after stabilizing;
drying the preformed growth substrate (1) to below 20% moisture content to form a dry preformed growth substrate (1) before adding seeds (40) into the dry preformed growth substrate (1); and
forming the dry preformed growth substrate (1) into the dry preformed plant growth substrate (1) by adding seeds (40) into the dry preformed growth substrate (1),
the method further comprises a step of:
applying natamycin suspension (30) to the preformed growth substrate (1); or
applying natamycin suspension (30) to the dry preformed growth substrate (1); or
applying natamycin suspension (30) to the dry preformed plant growth substrate (1).

2. A method for producing a dry preformed plant growth substrate (1) according to claim 1, **characterized in that** the step of applying natamycin suspension (30) to the preformed growth substrate (1) or the dry preformed growth substrate (1) or to the dry preformed plant growth substrate (1) comprises:
applying natamycin suspension (30) to the preformed growth substrate (1) after the step of
directing the mixture (20) into a mould for forming a preformed growth substrate (1), and before the step of
stabilizing the mixture (20) inside the mould into the preformed growth substrate (1).

3. A method for producing a dry preformed plant growth substrate (1) according to claim 1, **characterized in that** the step of applying natamycin suspension (30) to the preformed growth substrate (1) or the dry preformed growth substrate (1) or to the dry preformed plant growth substrate (1) comprises:
applying natamycin suspension (30) to the preformed growth substrate (1) after the step of
stabilizing the mixture (20) inside the mould into the dry preformed growth substrate (1), and before the step of
removing the preformed growth substrate (1) from the mould after stabilizing.

4. A method for producing a dry preformed plant growth substrate (1) according to claim 1, **characterized in that** the step of applying natamycin suspension (30) to the preformed growth substrate (1) or the dry preformed growth substrate (1) or to the dry preformed plant growth substrate (1) comprises:
applying natamycin suspension (30) to the dry preformed growth substrate (1) after the step of
drying the preformed growth substrate (1) to below 20% moisture content to form the dry preformed growth substrate (1) before adding seeds (40) into the dry preformed growth substrate (1); and before the step of
forming the dry preformed growth substrate (1) into the dry preformed plant growth substrate (1) by adding seeds (40) into the dry preformed growth substrate (1).

5. A method for producing a dry preformed plant growth substrate (1) according to claim 1, **characterized in that** the step of applying natamycin suspension (30) to the preformed growth substrate (1) or the dry preformed growth substrate (1) or to the dry preformed plant growth substrate (1) comprises:
applying natamycin suspension (30) to the dry preformed plant growth substrate (1) after the step of
forming the dry preformed growth substrate (1) into the dry preformed plant growth substrate (1) by adding seeds (40) into the dry preformed growth substrate (1).

6. A method for producing a dry preformed plant growth substrate (1) according to any previous claim, **characterized in that** the step of applying natamycin suspension (30) to the preformed growth substrate (1) or the dry preformed growth substrate (1) or to the dry preformed plant growth substrate (1) comprises:
spraying the natamycin suspension (30) to the preformed growth substrate (1) or the dry preformed growth substrate (1) or to the dry preformed plant growth substrate (1).

7. A method for producing a dry preformed plant growth substrate (1) according to any previous claim, **characterized in that** the step of directing the mixture (20) into mould comprises:
directing the mixture (20) into the mould to form a top surface (11) of the preformed growth substrate (1), and
the step of applying natamycin suspension (30) to the preformed growth substrate (1) or the dry preformed growth substrate (1) or to the dry preformed plant growth substrate (1) comprises:
applying natamycin suspension (30) to the top surface of the preformed growth substrate (1); or
applying natamycin suspension (30) to the top surface of the dry preformed growth substrate (1); or
applying natamycin suspension (30) to the top surface of the dry preformed plant growth substrate (1).

8. A method for producing a dry preformed plant growth substrate (1) according to any previous claim, **characterized in that** the step of forming the dry preformed growth substrate (1) into the dry preformed plant growth substrate (1) comprises:
placing the seeds (40) in the dry preformed growth substrate (1) at a depth relative to a top surface (11) of the dry preformed growth substrate (1).

9. A method for producing a dry preformed plant growth substrate (1) according to any preceding claim, **characterized in that** the step of producing the mixture (20) further comprises:
mixing at least one functional additive together with the plant-derived component and solvent, or
mixing an adhesive component together with the plant-derived component and solvent, or
mixing an adhesive component together with the plant-derived component and solvent and further mixing at least one other functional additive together with the plant-derived component, the adhesive component and solvent.

10. A method for producing a dry preformed plant growth substrate (1) according to any preceding claim, **characterized in that** the method comprises a step of:
dispersing natamycin in solvent, ethanol, or propanol such that the natamycin suspension (30) having a concentration of 2-10% by mass prior to the step of applying natamycin suspension (30) to the preformed growth substrate (1) or the dry preformed growth substrate (1) or to the dry preformed plant growth substrate (1).

11. A method for producing a dry preformed plant growth substrate (1) according to any preceding claim, **characterized in that** the step of applying natamycin suspension (30) to the preformed growth substrate (1) or the dry preformed growth substrate (1) or to the dry preformed plant growth substrate (1) comprises:
applying natamycin suspension (30) to the preformed growth substrate (1) or the dry preformed growth substrate (1) or to the dry preformed plant growth substrate (1) in amount maximum 2,0 litre/m².

12. A dry preformed plant growth substrate (1) for growing plants in an indoor garden device, **characterized in that** the dry preformed growth substrate (1) comprises:
a solid substrate body (10) having a top surface (11), a bottom surface (12) and an outer surface (13) extending between the top surface (11) and the bottom surface (12) around the solid substrate body (10),
seeds (40) arranged inside the solid substrate body (10),
the solid substrate body (10) comprising in a dry state:
at least one plant-derived component and an adhesive component, which are interconnected to form a stable porous structure in a form of a solid substrate body (10),
the solid substrate body (10) further comprising natamycin.

13. A dry preformed plant growth substrate (1) according to claim 12, **characterized in that** the natamycin is provided on the top surface (11) of the solid substrate body (10).

14. A dry preformed plant growth substrate (1) according to claim 12 or 13, **characterized in that** the natamycin is provided on the outer surface (13) of the solid substrate body (10).

15. A dry preformed plant growth substrate (1) according to any of claims 12-14, **characterized in that** the natamycin is provided in the structure of the solid substrate body (10).
